# EUROPEAN PATENT SPECIFICATION

(11) **EP 3 844 344 B1**
(45) Date of publication and mention of the grant of the patent: **09.12.2026**
(21) Application number: 19854371.2
(22) Date of filing: 26.08.2019
(51) Int. Cl.: E01B 31/13, B61D 15/00

(54) **RAIL MILLING VEHICLE**
SCHIENENFRÄSFAHRZEUG
VÉHICULE DE FRAISAGE DE RAIL

(30) Priority: 27.08.2018 US 201862723387 P
(43) Date of publication of application: 07.07.2021
(73) Proprietor: Harsco Technologies LLC, Fairmont, MN 56031 (US)
(72) Inventor: SCHRUNK, Robert R., Fairmont, Minnesota 56031 (US)
(74) Representative: Barker Brettell LLP
(86) International application number: PCT/US2019/048098
(87) International publication number: WO 2020/046792

(56) References cited:
- CH-A5- 693 960
- JP-A- 2004 190 334
- JP-A- H05 106 203
- JP-A- H07 229 103
- US-A- 4 621 460
- US-A- 4 993 193

## Description

### CROSS-REFERENCE TO RELATED APPLICATION

This application claims priority to U.S. Provisional Patent Application No. 62/723,387 filed on August 27, 2018.

### BACKGROUND

As described throughout, a railroad track may include a pair of elongated, substantially parallel rails, which may be coupled to a plurality of laterally extending rail ties. In some examples, a top surface of each rail tie may be coupled to a bottom surface of the rails. The rail ties may be disposed on a ballast bed of hard particulate material such as gravel (e.g., ballast, rocks, and/or the like) and may be used to support the rails. Over time, normal wear and tear on the railroad may cause the rail to degrade, thus requiring operations to repair the rail.

Rail grinders are commonly used to repair the rail running surface due to deformation and shape the transverse section of the rail to control the wheel/rail interface. Grinders may be handheld, cart mounted, or rail-bound machines. Rail grinders are applied to the rail to grind away deformations. As an alternative to rail grinding, rail milling machines may be used to perform a cutting process to remove portions of rail and help restore the rail profile. In conventional applications, milling machines first pass over the running rail to perform a cutting process to repair rail profile. Thereafter, grinding machines or grinding attachments that are part of the milling machine further address the portion of rail that has been milled in order to complete the repair process. What is needed is a machine and
process for repairing rail that does not require multiple operations, thus making the repair process more efficient, and also avoiding the sparks and dust inherent to any grinding operation.
CH693960A5 discloses a rail profiling machine for machining the longitudinal and transverse profiles of the rail sections of a track. The rail profiling machine is equipped with at least one milling head per rail section which can be moved with respect to the rail axis.

### BRIEF SUMMARY

Aspects of the invention are set out according to the appended independent claims. Embodiments of the invention are set out according to the appended dependent claims. The present disclosure relates to a rail vehicle that includes a chassis and a rail milling assembly coupled to the chassis. The rail milling assembly includes a bracket for coupling the rail milling assembly to the chassis and a plurality of milling workheads forming a portion of the rail milling assembly. The milling workheads each including a spindle and a cutter depending downwardly from the spindle. The spindle and cutter are driven by a spindle motor. The milling workheads further each include a cylinder rod disposed between the spindle motor and the spindle to thereby bias the cutter towards the rail during operation.

Each milling workhead optionally includes a shroud disposed about the cutter for capturing sparks and dust. Further, the rail milling assembly is adapted to float both laterally and in a vertical direction, thus accommodating variations and curves in the rail. The milling workheads are fixed in an angular position relative to the rail and may be extended axially towards the rail in an operation mode via the cylinder rod, which may be a double rod cylinder.

Multiple milling workheads are provided for each rail milling assembly, such as ten milling workheads - five for each side of rail. The rail milling assemblies may be provided in a multiple car consist, such as a three-car consist, thus providing up to thirty milling workheads. Related methods of carrying out rail milling operations are described.

### BRIEF DESCRIPTION OF THE DRAWINGS

Reference is now made to the following descriptions taken in conjunction with the accompanying drawings.
FIGURE 1 illustrates a side view of an exemplary rail vehicle having a milling assembly for milling rail.
FIGURE 2 illustrates a perspective view of a milling assembly.
FIGURE 3 illustrates a perspective view of a milling assembly.
FIGURE 4 illustrates a perspective view of a milling assembly.
FIGURE 5 illustrates a computing system associated with the milling assembly.

### DETAILED DESCRIPTION

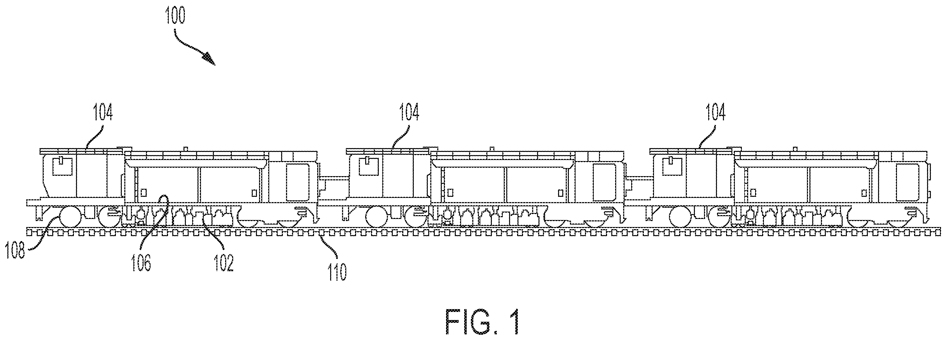

Referring to FIGURE 1, a rail vehicle 100 for performing rail maintenance operations includes rail milling assemblies 102 for carrying out rail milling operations. In some embodiments, the rail vehicle 100 may include three rail cars 104, thus constituting a three-car consist. The rail vehicle 100 includes a chassis 106 and rail wheels 108 coupled to the chassis for enabling the rail vehicle to travel along rail track 110. The rail vehicle 100 further includes a propulsion device for propelling the rail vehicle along track 110. In some embodiments, the rail vehicle 100 may include an operator cabin for housing an operator of the rail vehicle. However, in other embodiments, the operator cabin may be removed and the rail vehicle 100 may operate as a drone or autonomous maintenance vehicle. In such embodiments, the drone vehicle does not have a human operator, but rather is operated remotely. Further, the rail vehicle 100 may travel track in either direction, while milling activities may take place from right to left as viewed in FIGURE 1.

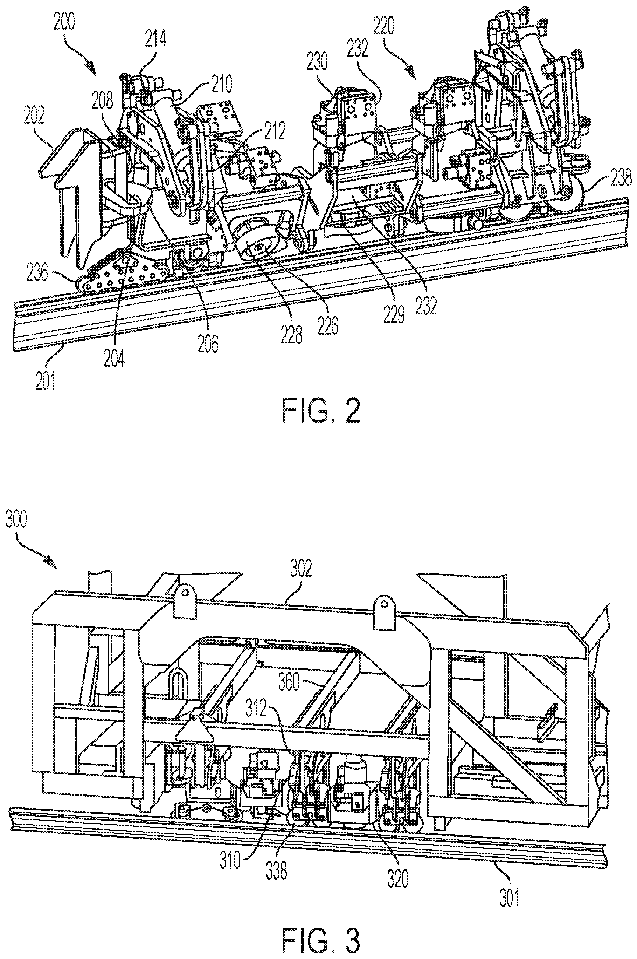

A rail milling assembly 200 for milling rail 201 according to an embodiment of the present disclosure is depicted in FIGURE 2. The rail milling assembly 200 includes a number of components that cooperate to provide for improved milling of a rail profile. As shown, the rail milling assembly 200 is designed for operation from right to left in this view. The rail milling assembly 200 includes a forwardly positioned bracket 202, which is operable to couple the carriage to a rail chassis (as depicted in FIGURE 3). In some embodiments, the carriage may be coupled to Harsco's C-Model grinder chassis in place of the grinding carriage.

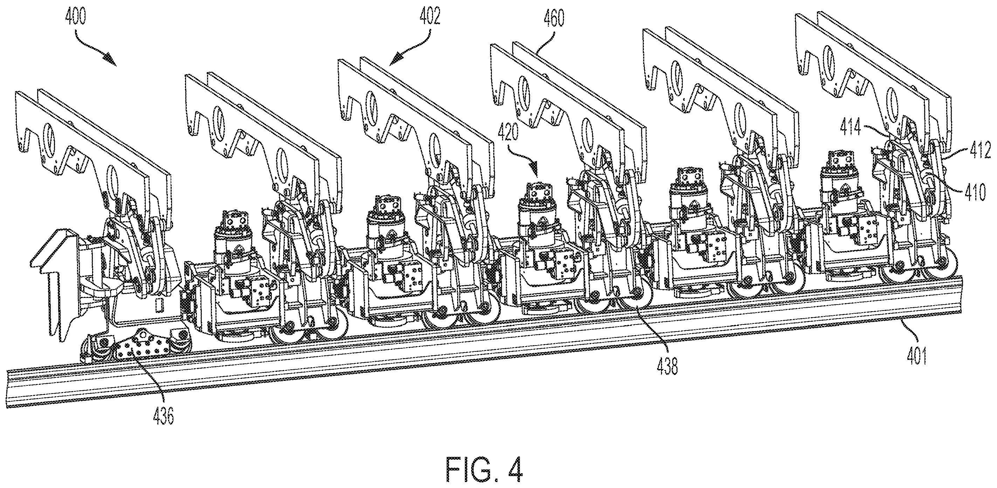

While the bracket 202 is fixed to the chassis, the rail milling assembly 200 is permitted to float both vertically and laterally via an oblong slot 204 defined in a front frame member 206 of the rail milling assembly. That is, a pin member 208 fixed to the bracket 202 is disposed through the slot 204, thus operably coupling the rail milling assembly 200 to the bracket and the rail chassis. Such an arrangement permits the milling workheads (to be described) to stay referenced to the gauge face of the rail 201, and also vertically to stay referenced to the top of the rail. An actuator 210, such as a hydraulic cylinder, is disposed proximal to the front frame member 206 and extends in the lateral direction between a pair of linkage elements 212, 214. The cylinder 210 is free floating and allows for biasing of the linkage elements 212, 214 in the lateral direction to accommodate for gauge variations, curves, and non-uniform sections of rail. The linkage elements 212, 214 are pinned to the chassis (as better shown in FIGURES 3 and 4). A similar arrangement is disposed at the rear of the rail milling assembly 200.

In the embodiment of FIGURE 2, a plurality of milling workheads 220 are disposed between a front portion and a rear portion of the rail milling assembly 200. Each milling workhead 220 includes a cutter 226 disposed within a shroud 228. The cutter 226 is coupled to a spindle 229, which in turn, is coupled to a spindle motor 230 for imparting rotation to the spindle and therefore the cutter. The milling workhead includes a hydraulic cylinder 44 which contains the rotating elements, supports the spindle motor 230 and may be actuated to impart motion of the rod relative to the cylinder to thereby bias the cutter 226 downwardly toward the rail 201 when an operating position is desired. In some embodiments, the cylinder rod 232 is a double rod cylinder. The particular configuration of the cylinder rod 232 of the milling workhead 220 allows for the cylinder rod to support and deploy the spindle 229 while maintaining its angles.

A support plate 234 adapts the spindle motor 230 to the cylinder rod 232 (thus preventing spinning of the rod through a bushing arrangement) and the cutter 226. The shroud 228 around the cutter 226 is adapted to contain the removed rail chips and to allow for a vacuum system to pull the chips away from the cutter. A chip collection unit (not shown) may be provided to collect chips via the use of a centrifugal blower associated with the milling workhead 220.

Each milling workhead 220 is fixed in position relative to the rail 201 during rail milling operations. The milling workheads 220 are arranged at unique angles, thus allowing the milling workheads to address a portion of the rail necessary for rail maintenance and defect correction. No two milling workheads are set to operate at the same angle thus maximizing the rail to be addressed in the milling process. **In** this manner, the operator does not need to select a "pattern" as is the case with a rail grinder, but rather selects a specific rail "profile." For example, if twenty milling workheads 220 are being used, they can generate twenty individual facets that produce the selected rail profile. This allows the operator to apply one profile in one track segment and then seamlessly switch to a different profile for another track segment.

The rail milling assembly 200 further includes a roller assembly 236 disposed at the front portion 222 of the rail milling assembly. The roller assembly 236 provides a reference for the milling workheads 220 as the rail milling assembly 200 approaches rough sections of rail. Further, a number of rollers 238 may be disposed on the rail milling assembly 200 to provide gauge reference rollers to maintain a consistent lateral position of the carriage. In some embodiments, the roller 238 disposed at the front portion of the rail milling assembly 200 has a gauge reference flange. **In** some embodiments, the rollers 238 disposed at the rear portion of the rail milling assembly 200 have a conical tread along with a gauge reference flange. The gauge reference flange may be tilted inwardly such that it slices in at the rail 201 instead of sliding straight down. In this manner, the rollers 238 disposed at the rear portion of the rail milling assembly 200 avoid the vertical friction that is associated with typical flanged rollers. Further, the roller assembly 236 may have overlapping wheels in order to provide for more wheels in a smaller space. Such an arrangement facilitates the roller assembly 236 to skim over gaps and defects in the rail 201 without imparting much vertical movement to the lead spindle 229.

FIGURE 3 depicts an example not falling within the scope of the claims in which a rail milling assembly 300 is coupled to a chassis 302 of a rail vehicle (such as rail vehicle 100 depicted in FIGURE 1). The rail milling assembly 300 is similar in construct to the rail milling assembly 200 described above with reference to FIGURE 2; however, the rail milling assembly 300 is modified to include only one milling workhead 320 between rollers 338. The rail milling assembly 300 is coupled to frame members 360 that are pinned to linkage elements 312, 314 and hydraulic cylinder 310. The frame members 360 extend laterally from one rail 301 to the other rail (not depicted) of the track. In this manner, the frame members 360 may further couple the rail milling assembly 300 to the chassis 302. Also, while not depicted, in practice, an additional rail milling assembly is disposed over the other rail such that both rails may be milled according to the disclosures herein. Further, it is to be appreciated that the frame members 360 may be mounted on a pivot that allows for slight rotation of the frame members during operation.

FIGURE 4 depicts an alternative embodiment in which a rail milling assembly 400 is coupled to a chassis 402 of a rail vehicle (such as rail vehicle 100 depicted in FIGURE 1). The rail milling assembly 400 is similar in construct to the rail milling assembly 200 described above with reference to FIGURE 2 and the rail milling assembly 300 described above with respect to FIGURE 3; however, the rail milling assembly 400 is modified to include five milling workheads 420 that are interposed by rollers 438. In addition, a roller assembly 436 may be assembled at a
front portion of the rail milling assembly 400, while a roller 438 may be positioned at a rear of the rail milling assembly.

Similar to the example of FIGURE 3, the rail milling assembly 400 is coupled to frame members 460 that are pinned to linkage elements 412, 414 and hydraulic cylinder 410. The frame members 460 extend laterally from one rail 401 to the other rail (not depicted) of the track. In this manner, the frame members 460 may further couple the rail milling assembly 400 to the chassis (not shown). Also, while not depicted, in practice, an additional rail milling assembly is disposed over the other rail such that both rails may be milled according to the disclosures herein. Further, it is to be appreciated that the frame members 460 may be mounted on a pivot that allows for slight rotation of the frame members during operation.

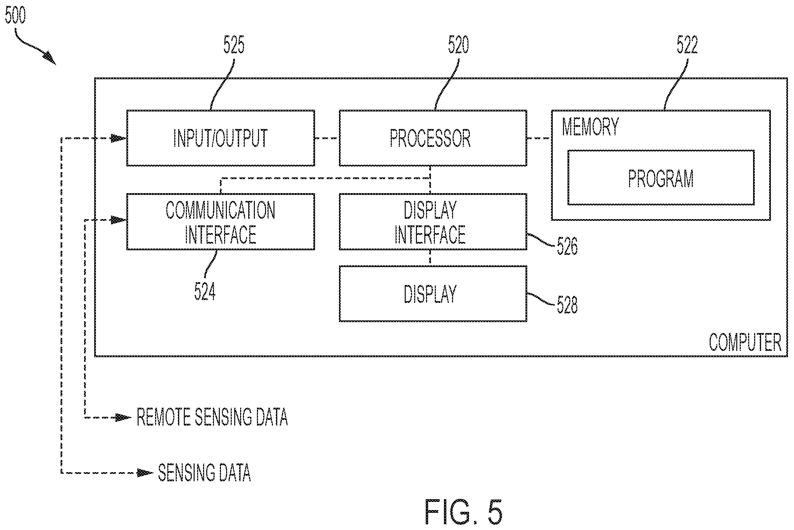

Referring to FIGURE 5, the rail vehicle 100 may be equipped with a computing or control system that may take the form of a computer or data processing system 500 that includes a processor 520 configured to execute at least one program stored in memory 522 for the purposes of performing one or more of the processes disclosed herein. The processor 520 may be coupled to a communication interface 524 to receive remote sensing data, such as the profile of rail, as well as transmit instructions to receivers distributed throughout the rail vehicle 100, such as to the milling workheads to commence rail milling operations. The processor 520 may also receive and transmit data via an input/output block 525. In addition to storing instructions for the program, the memory may store preliminary, intermediate and final datasets involved in techniques that are described herein. Among its other features, the computing system 500 may include a display interface 526 and a display 528 that displays the various data that is generated as described herein. It will be appreciated that the computing system 500 shown in FIGURE 5 is merely exemplary in nature and is not limiting of the systems and methods described herein.

The computing system 500 may be utilized to implement a control system for use with the described rail milling vehicle. For example, the control system may be designed to allow an operator to select a template for achieving the desired, final rail shape. This lies in contrast to conventional grinders with which operators select a grinding pattern. Grinding patterns are set up to take metal off of some focus region on the rail, and require multiple passes to achieve the desired rail shape. With the template that is selected with the presently described rail milling vehicle, the desired, final rail shape may be achieved with only one pass, thus reducing the time required for surface treatment of a given rail.

The control system for use with the described rail milling vehicle is able to self-calibrate on a section of track for which the existing cross-sectional rail profile has been accurately measured. This allows a computer associated with the control system to determine the required cylinder rod extensions for each spindle for that particular rail profile. From this, the computer may calculate the required cylinder rod extensions for any other rail profile (template) that the operator might select. If the desired template is a standard rail section, this rail section should be included in the library of selectable options. As envisioned, the system would identify a collection of the most common standard rail sections. If a railway wants a unique, customized template, the system would be able to import a measured profile that is known to match the desired template, or the special profile may be programmed as a selectable library option.

Several advantages may be achieved by implementing a rail milling vehicle according to the principles disclosed herein. Given the number of milling cutters associated with the milling vehicle described herein, it is possible to complete milling processes without having to follow with grinding processes after the milling processes. That is, the milling vehicle according to the present disclosure may obviate the need to have additional grinding vehicles and workheads to complete the repair process. In this manner, the sparks and dust associated with conventional grinding processes may be avoided. In addition, the shroud and vacuum process may be utilized to collect milled chips of rail, thus leaving the rail surface and surrounding area substantially free of such milled chips. Still further, the milling vehicle of the present disclosure may offer the following benefits over conventional milling technology:
- Higher work speed, e.g., two times the speed of conventional milling technology
- Ability to remove less material when employed in maintenance mode as opposed to corrective mode
- Ability to produce multiple rail profiles, e.g., versus conventional milling technology where the rail shape is built into the cutter
- Avoids need for clean-up grinding
- Ability to operate on track with poor support, e.g. whereas conventional milling technology causes excessive chatter.

## Claims

1. A rail vehicle (100), comprising:
a chassis (106); and
a rail milling assembly (102; 200; 400) coupled to the chassis (106), the rail milling assembly (102; 200; 400) including:
a bracket (202) for coupling the rail milling assembly (102; 200; 400) to the chassis (106); and
a plurality of milling workheads (220; 420) disposed between a front portion and a rear portion of the rail milling assembly (102; 200; 400), each milling workhead (220; 420) of the plurality of milling workheads (220; 420) forming a portion of the rail milling assembly (102; 200; 400), each milling workhead (220; 420) including:
a spindle (229);
a cutter (226) depending downwardly from the spindle (229), the spindle (229) and cutter (226) configured to be driven by a spindle motor (230); and
a cylinder rod (232) disposed between the spindle motor (230) and the spindle (229) and configured to bias the cutter (226) towards a rail (110; 201; 401) during operation;
wherein:
the plurality of milling workheads (220; 420) are fixed at an angular position relative to the rail (110; 201; 401);
no two milling workheads (220; 420) are set to operate at the same angle;
the rail milling assembly (102; 200; 400) further includes:
a front frame member (206) of the rail milling assembly (102; 200; 400), the front frame member (206) including an oblong slot (204) for receiving a pin (208) coupled to the bracket (202); and
the pin (208) is configured to move in both a lateral direction and a vertical direction through the oblong slot (204), such that the rail milling assembly (102; 200; 400) floats relative to the bracket (202).

2. The rail vehicle (100) of claim 1, wherein each milling workhead (220;
420) of the plurality of milling workheads (220; 420) further includes a shroud (228) surrounding the cutter (226) and adapted to allow a vacuum system to pull rail chips away from the cutter (226).

3. The rail vehicle (100) of claim 1, wherein the rail milling assembly (400) further includes rollers (438) interposed between the plurality of milling workheads (420); and optionally wherein the rollers (438) disposed at a rear portion of the rail milling assembly (400) comprise a conical tread and a gauge reference flange, the gauge reference flange being tilted inwardly toward the rail.

4. The rail vehicle (100) of claim 1, further comprising:
a pair of linkage elements (212, 214) coupled to a front frame member (206); and
a hydraulic cylinder (210), wherein the linkage elements (212, 214) are coupled by the hydraulic cylinder (210), the hydraulic cylinder (210) is free floating to bias the pair of linkage elements (212, 214) in the lateral direction.

5. The rail vehicle (100) of claim 1, further comprising a control system (500) comprising a processor (520) configured to execute at least one program stored in a memory (522), the processor (520) being coupled to a communication interface (524) to receive remote sensing data, such as the rail profile, and to transmit instructions, the control system (500) being configured to: allow an operator to select a rail profile template corresponding to a desired rail shape; self-calibrate on a section of track for which the existing cross-sectional rail profile has been accurately measured; determine a required cylinder rod extension associated with each spindle (229) of the plurality of milling workheads (220; 420) for the measured rail profile; based on the self-calibration and on the determined cylinder rod extensions, calculate required cylinder rod extensions for a rail profile corresponding to the selected template; and transmit instructions to the milling workheads to commence rail milling operations.

6. The rail vehicle (100) of claim 5, wherein the rail profile template is a standard rail section included in a library of selectable templates.

7. A method for performing milling operations on rail, the method comprising:
operating the rail vehicle (100) of claim 1, by:
operating the spindle motors (230) of the plurality of milling workheads (220; 420) to drive the spindles (229) and the cutters (226);
actuating a first cylinder rod (232) of a first milling workhead (220; 420) of the plurality of milling workheads (220; 420) to move a first cutter (226) towards the rail (110; 201; 401); and
performing a rail cutting operation with the first cutter (226) to thereby remove a portion of the rail (110; 201; 401) to repair the rail profile.

8. The method of claim 7, wherein the milling workhead further includes a shroud (228) surrounding the cutter (226), the method, further comprising
capturing, by said shroud (228) rail chips eels generated during the rail cutting operation.

## Patentansprüche

1. Schienenfahrzeug (100), umfassend:
ein Fahrgestell (106); und
eine Schienenfräsanordnung (102; 200; 400), die an das Fahrgestell (106) gekoppelt ist, wobei die Schienenfräsanordnung (102; 200; 400) Folgendes beinhaltet:
eine Halterung (202) zum Koppeln der Schienenfräsanordnung (102; 200; 400) an das Fahrgestell (106); und
eine Vielzahl von Fräsarbeitsköpfen (220; 420), die zwischen einem vorderen Abschnitt und einem hinteren Abschnitt der Schienenfräsanordnung (102; 200; 400) angeordnet ist, wobei jeder Fräsarbeitskopf (220; 420) der Vielzahl von Fräsarbeitsköpfen (220; 420) einen Abschnitt der Schienenfräsanordnung (102; 200; 400) bildet, wobei jeder Fräsarbeitskopf (220; 420) Folgendes beinhaltet:
eine Spindel (229);
eine Schneide (226), die von der Spindel (229) nach unten herabhängt, wobei die Spindel (229) und die Schneide (226) dazu konfiguriert sind, durch einen Spindelmotor (230) angetrieben zu werden; und
eine Zylinderstange (232), die zwischen dem Spindelmotor (230) und der Spindel (229) angeordnet und dazu konfiguriert ist, die Schneide (226) während eines Betriebs in Richtung einer Schiene (110; 201; 401) vorzuspannen;
wobei:
die Vielzahl von Fräsarbeitsköpfen (220; 420) in einer Winkelposition relativ zu der Schiene (110; 201; 401) fixiert ist;
keine zwei Fräsarbeitsköpfe (220; 420) dazu eingestellt sind, in dem gleichen Winkel zu arbeiten;
die Schienenfräsanordnung (102; 200; 400) ferner Folgendes beinhaltet:
ein vorderes Rahmenelement (206) der Schienenfräsanordnung (102; 200; 400), wobei das vordere Rahmenelement (206) einen länglichen Schlitz (204) zum Aufnehmen eines Stifts (208), der an die Halterung (202) gekoppelt ist, beinhaltet; und
der Stift (208) dazu konfiguriert ist, sich sowohl in einer lateralen Richtung als auch einer vertikalen Richtung durch den länglichen Schlitz (204) zu bewegen, sodass die Schienenfräsanordnung (102; 200; 400) relativ zu der Halterung (202) frei beweglich ist.

2. Schienenfahrzeug (100) nach Anspruch 1, wobei jeder Fräsarbeitskopf (220; 420) der Vielzahl von Fräsarbeitsköpfen (220; 420) ferner eine Ummantelung (228) beinhaltet, welche die Schneide (226) umgibt und dazu ausgelegt ist, es einem Vakuumsystem zu ermöglichen, Schienenspäne von der Schneide (226) weg zu ziehen.

3. Schienenfahrzeug (100) nach Anspruch 1, wobei die Schienenfräsanordnung (400) ferner Rollen (438) beinhaltet, die zwischen der Vielzahl von Fräsarbeitsköpfen (420) eingefügt sind; und optional wobei die Rollen (438), die an einem hinteren Abschnitt der Schienenfräsanordnung (400) angeordnet sind, eine konische Lauffläche und einen Spurweitenreferenzflansch umfassen, wobei der Spurweitenreferenzflansch nach innen in Richtung der Schiene geneigt ist.

4. Schienenfahrzeug (100) nach Anspruch 1, ferner umfassend:
ein Paar von Verbindungselementen (212, 214), die an ein vorderes Rahmenelement (206) gekoppelt sind; und
einen Hydraulikzylinder (210), wobei die Verbindungselemente (212, 214) durch den Hydraulikzylinder (210) gekoppelt sind, wobei der Hydraulikzylinder (210) frei beweglich ist, um das Paar von Verbindungselementen (212, 214) in der lateralen Richtung vorzuspannen.

5. Schienenfahrzeug (100) nach Anspruch 1, ferner umfassend ein Steuersystem (500), das einen Prozessor (520) umfasst, der dazu konfiguriert ist, mindestens ein Programm auszuführen, das in einem Speicher (522) gespeichert ist, wobei der Prozessor (520) an eine Kommunikationsschnittstelle (524) gekoppelt ist, um Fernerfassungsdaten, wie etwa das Schienenprofil, zu empfangen und Anweisungen zu übertragen, wobei das Steuersystem (500) zu Folgendem konfiguriert ist: Zulassen, dass ein Bediener eine Schienenprofilvorlage auswählt, die einer gewünschten Schienenform entspricht; Selbstkalibrieren auf einer Gleisstrecke, für die das bestehende Querschnittsschienenprofil genau gemessen wurde; Bestimmen einer erforderlichen Zylinderstangenerstreckung, die jeder Spindel (229) der Vielzahl von Fräsarbeitsköpfen (220; 420) für das gemessene Schienenprofil zugeordnet ist; basierend auf der Selbstkalibrierung und auf den bestimmten Zylinderstangenerstreckungen, Berechnen von erforderlichen Zylinderstangenerstreckungen für ein Schienenprofil, das der ausgewählten Vorlage entspricht; und Übertragen von Anweisungen an die Fräsarbeitsköpfe, um Schienenfräsvorgänge zu beginnen.

6. Schienenfahrzeug (100) nach Anspruch 5,
wobei die Schienenprofilvorlage eine standardmäßige Schienenstrecke ist, die in einer Bibliothek auswählbarer Vorlagen beinhaltet ist.

7. Verfahren zum Durchführen von Fräsvorgängen an einer Schiene, wobei das Verfahren Folgendes umfasst:
Betreiben des Schienenfahrzeugs (100) nach Anspruch 1 durch:
Betreiben der Spindelmotoren (230) der Vielzahl von Fräsarbeitsköpfen (220; 420), um die Spindeln (229) und die Schneiden (226) anzutreiben;
Betätigen einer ersten Zylinderstange (232) eines ersten Fräsarbeitskopfs (220; 420) der Vielzahl von Fräsarbeitsköpfen (220; 420), um eine erste Schneide (226) in Richtung der Schiene (110; 201; 401) zu bewegen; und
Durchführen eines Schienenschneidevorgangs mit der ersten Schneide (226), um dadurch einen Abschnitt der Schiene (110; 201; 401) zu entfernen, um das Schienenprofil zu reparieren.

8. Verfahren nach Anspruch 7, wobei der Fräsarbeitskopf ferner eine Ummantelung (228) beinhaltet, welche die Schneide (226) umgibt, wobei das Verfahren ferner Folgendes umfasst:
Einsammeln, durch die Ummantelung (228), von Schienenspänen, die während des Schienenschneidevorgangs erzeugt werden.

## Revendications

1. Véhicule ferroviaire (100), comprenant :
un châssis (106) ; et
un ensemble de fraisage de rail (102 ; 200 ; 400) couplé au châssis (106), l'ensemble de fraisage de rail (102 ; 200 ; 400) incluant :
un support (202) pour le couplage de l'ensemble de fraisage de rail (102 ; 200 ; 400) au châssis (106) ; et
une pluralité de têtes de travail de fraisage (220 ; 420) disposées entre une portion avant et une portion arrière de l'ensemble de fraisage de rail (102 ; 200 ; 400), chaque tête de travail de fraisage (220 ; 420) de la pluralité de têtes de travail de fraisage (220 ; 420) formant une portion de l'ensemble de fraisage de rail (102 ; 200 ; 400), chaque tête de travail de fraisage (220 ; 420) incluant :
une broche (229) ;
un outil de coupe (226) pendant vers le bas à partir de la broche (229), la broche (229) et l'outil de coupe (226) étant configurés pour être entraînés par un moteur de broche (230) ; et
une tige de vérin (232) disposée entre le moteur de broche (230) et la broche (229) et configurée pour la sollicitation de l'outil de coupe (226) vers un rail (110 ; 201 ; 401) pendant le fonctionnement ;
dans lequel :
la pluralité de têtes de travail de fraisage (220 ; 420) sont fixes au niveau d'une position angulaire par rapport au rail (110 ; 201 ; 401) ;
aucune paire de têtes de travail de fraisage (220 ; 420) n'est réglée pour fonctionner au même angle ;
l'ensemble de fraisage de rail (102 ; 200 ; 400) inclut en outre :
un élément de châssis avant (206) de l'ensemble de fraisage de rail (102 ; 200 ; 400), l'élément de châssis avant (206) incluant une fente oblongue (204) pour la réception d'une goupille (208) couplée au support (202) ; et
la goupille (208) est configurée pour se déplacer à la fois dans une direction latérale et une direction verticale à travers la fente oblongue (204), de sorte que l'ensemble de fraisage de rail (102 ; 200 ; 400) flottent : par rapport au support (202).

2. Véhicule ferroviaire (100) selon la revendication 1, dans lequel chaque tête de travail de fraisage (220 ; 420) de la pluralité de têtes de travail de fraisage (220 ; 420) inclut en outre une enveloppe de protection (228) entourant l'outil de coupe (226) et conçue pour permettre à un système de vide d'extraire les copeaux de rail à distance de l'outil de coupe (226).

3. Véhicule ferroviaire (100) selon la revendication 1, dans lequel l'ensemble de fraisage de rail (400) inclut en outre des galets (438) interposés entre la pluralité de têtes de travail de fraisage (420) ; et éventuellement dans lequel les galets (438) disposés au niveau d'une portion arrière de l'ensemble de fraisage de rail (400) comprennent une bande de roulement conique et un boudin de référence d'écartement, le boudin de référence d'écartement étant incliné vers l'intérieur vers le rail.

4. Véhicule ferroviaire (100) selon la revendication 1, comprenant en outre :
une paire d'éléments de liaison (212, 214) couplée à un élément de châssis avant (206) ; et
un vérin hydraulique (210), dans lequel les éléments de liaison (212, 214) sont couplés par le vérin hydraulique (210), le vérin hydraulique (210) étant à flotteur libre pour la sollicitation de la paire d'éléments de liaison (212, 214) dans la direction latérale.

5. Véhicule ferroviaire (100) selon la revendication 1, comprenant en outre un système de commande (500) comprenant un processeur (520) configuré pour l'exécution d'au moins un programme stocké dans une mémoire (522), le processeur (520) étant couplé à une interface de communication (524) pour la réception de données de télédétection, telles que le profil de rail, et pour la transmission d'instructions, le système de commande (500) étant configuré pour : permettre à un opérateur de sélectionner un modèle de profil de rail correspondant à une forme de rail souhaitée ; réaliser un auto-étalonnage sur une section de voie pour laquelle le profil de rail de section transversale existant a été mesuré avec précision ; déterminer une extension de tige de vérin requise associée à chaque broche (229) de la pluralité de têtes de travail de fraisage (220 ; 420) pour le profil de rail mesuré ; sur la base de l'auto-étalonnage et des extensions de tige de vérin déterminées, calculer des extensions de tige de vérin requises pour un profil de rail correspondant au modèle sélectionné ; et transmettre des instructions aux têtes de travail de fraisage pour le commencement d'opérations de fraisage de rail.

6. Véhicule ferroviaire (100) selon la revendication 5, dans lequel le modèle de profil de rail est une section de rail standard incluse dans une bibliothèque de modèles pouvant être sélectionnés.

7. Procédé pour la réalisation d'opérations de fraisage sur un rail, le procédé comprenant :
le fonctionnement du véhicule ferroviaire (100) selon la revendication 1, par :
le fonctionnement des moteurs de broche (230) de la pluralité de têtes de travail de fraisage (220 ; 420) pour l'entraînement des broches (229) et des outils de coupe (226) ;
l'actionnement d'une première tige de vérin (232) d'une première tête de travail de fraisage (220 ; 420) de la pluralité de têtes de travail de fraisage (220 ; 420) pour le déplacement d'un premier outil de coupe (226) vers le rail (110 ; 201 ; 401) ; et
la réalisation d'une opération de coupe de rail avec le premier outil de coupe (226) pour retirer de ce fait une portion du rail (110 ; 201 ; 401) pour la réparation du profil de rail.

8. Procédé selon la revendication 7, dans lequel la tête de travail de fraisage inclut en outre une enveloppe de protection (228) entourant l'outil de coupe (226), le procédé, comprenant en outre
la capture, par ladite enveloppe de protection (228) de copeaux de rail générés pendant l'opération de coupe de rail.
